# EUROPÄISCHE PATENTSCHRIFT

(11) **EP 1 216 809 B1**
(45) Veröffentlichungstag und Bekanntmachung des Hinweises auf die Patenterteilung: **15.09.2004**
(21) Anmeldenummer: 00127060.2
(22) Anmeldetag: 11.12.2000
(51) Int. Cl.: B29C 67/24

(54) **Kompatibilisierte Kunststoffmischung und Herstellungsverfahren**
Compatibilized polymer blend and manufacturing process therefor
Mélange de polymères compatibilisés et son procédé de fabrication

(43) Veröffentlichungstag der Anmeldung: 26.06.2002
(73) Patentinhaber: Roth Werke GmbH, 35232 Dautphetal (DE)
(72) Erfinder: Brusius, Ute, 35041 Marburg (DE); Heitz, Walter, 35274 Kirchhain (DE); Hoffmann, Manfred, 67098 Bad Drukheim (DE); Roth, Manfred, 35232 Dautphtal (DE)
(74) Vertreter: Rohmann, Michael, Dr.

(56) Entgegenhaltungen:
- EP-A- 1 077 222
- JP-A- 61 002 703
- US-A- 4 386 172
- US-A- 4 755 566
- US-A- 5 414 047
- US-A- 5 849 846
- US-A- 5 981 656
- US-A- 6 045 919
- PATENT ABSTRACTS OF JAPAN vol. 1996, no. 03, 29. März 1996 (1996-03-29) & JP 07 304817 A (SEKISUI CHEM CO LTD;OTHERS: 01), 21. November 1995 (1995-11-21)
- PATENT ABSTRACTS OF JAPAN vol. 018, no. 625 (C-1279), 29. November 1994 (1994-11-29) & JP 06 240077 A (SUMITOMO BAKELITE CO LTD;OTHERS: 01), 30. August 1994 (1994-08-30)
- DATABASE WPI Section Ch, Week 199403 Derwent Publications Ltd., London, GB; Class A18, AN 1994-022928 XP002170289 & JP 05 331214 A (KAO CORP), 14. Dezember 1993 (1993-12-14)
- PATENT ABSTRACTS OF JAPAN vol. 1996, no. 11, 29. November 1996 (1996-11-29) & JP 08 183887 A (SHOWA DENKO KK), 16. Juli 1996 (1996-07-16)

## Beschreibung

Die Erfindung betrifft eine Kunststoffmischung aus einem Polyolefin oder einem Copolymerisat dieses Polyolefins und zumindest einem zweiten Kunststoff mit polaren Gruppen, wobei zumindest ein polymerer Verträglichkeitsvermittler enthalten ist, wobei der polymere Verträglichkeitsvermittler ein Copolymerisat aus zumindest einem ungesättigten Kohlenwasserstoff mit zumindest einer ungesättigten Carbonsäure und/oder mit zumindest einem Derivat einer ungesättigten Carbonsäure ist und wobei der polymere Verträglichkeitsvermittler zumindest eine Carboxylatgruppe aufweist und als Ammoniumsalz vorliegt. Die Erfindung betrifft fernerhin ein entsprechendes Verfahren zur Herstellung einer Kunststoffmischung. Polare Gruppen meint insbesondere funktionelle Gruppen wie Carboxylgruppen, Estergruppen, Amidgruppen, Nitrilgruppen oder Hydroxylgruppen. Ein Verträglichkeitsvermittler wird zugesetzt, um die Mischbarkeit der Kunststoffe zu verbessern.

Eine Kunststoffmischung der eingangs genannten Art, von der die Erfindung ausgeht, ist aus US-A 5,414,047 bekannt. Hier wird ein Verfahren zur Herstellung von Copolymeren aus Polyolefin und Polymetacrylat beschrieben. Es handelt sich dabei um die Herstellung von sogenannten segmentierten Copolymeren. Ein polymerer Verträglichkeitsvermittler auf Basis einer ungesättigten copolymerisierbaren Säure wird genannt. Diese ungesättigte copolymerisierbare Säure kann zumindest teilweise in ein Ammonium-, Alkali-, Erdakalioder Zinksalz überführt werden. Bei dieser Kunststoffmischung bzw. bei dem bekannten Verfahren zur Herstellung dieser Kunststoffmischung lässt die Mischbarkeit der Kunststoffe bzw. die Homogenität der resultierenden Kunststoffmischung zu wünschen übrig.

Eine Kunststoffmischung aus einem ersten und einem zweiten Kunststoff ist fernerhin aus US-A 4,386,172 bekannt. Hier wird ein hydrophiles Polymer mit Carboxylgruppen im Molekül als polymerer Verträglichkeitsvermittler eingesetzt. Das Polymer kann in Form der freien Carbonsäure vorliegen oder in Form eines Alkalimetall- oder Ammoniumsalzes. Auch bei dieser Kunststoffmischung lässt die Mischbarkeit bzw. die Homogenität der Mischung zu wünschen übrig.

Bei vielen anderen aus der Praxis bekannten Kunststoffmischungen lässt die Mischbarkeit der betreffenden Kunststoffe ebenfalls zu wünschen übrig. Viele Kunststoffe sind normalerweise unverträglich und Mischungen aus diesen Kunststoffen sind deshalb oftmals zweiphasig oder mehrphasig. Um die Mischbarkeit der Kunststoffe zu verbessern, werden Verträglichkeitsvermittler eingesetzt. Bekannt sind insbesondere polymere Verträglichkeitsvermittler, die polare funktionelle Gruppen aufweisen. Mit diesen polymeren Verträglichkeitsvermittlern soll insbesondere die Mischbarkeit von unpolaren Kunststoffen (ohne polare Gruppen) mit polaren Kunststoffen verbessert werden. Leider lässt die Homogenität vieler aus dem Stand der Technik bekannter Kunststoffmischungen stark zu wünschen übrig. Diese bekannten Maßnahmen sind daher verbesserungsbedürftig.

Demgegenüber liegt der Erfindung das technische Problem zugrunde, eine Kunststoffmischung der eingangs genannten Art anzugeben, bei der eine optimale Mischbarkeit der Kunststoffe erreicht wird und eine sehr homogene Mischung erzielt wird.

Zur Lösung dieses technischen Problems lehrt die Erfindung eine Kunststoffmischung der eingangs genannten Art, welche dadurch gekennzeichnet ist, dass der Kunststoff mit den polaren Gruppen zumindest ein Kunststoff aus der Gruppe "Polyamid, Polyester, Polyvinylalkohol, Polycarbonat, Polyoxymethylen, Polyvinylpyrrolidon, Polyimid, Polycaprolacton" oder ein Copolymerisat zumindest eines dieser Kunststoffe ist und dass der polymere Verträglichkeitsvermittler als quartäres Ammoniumsalz vorliegt.

Carboxylatgruppe meint im Rahmen der Erfindung eine Carboxylgruppe in Anionenform (-COO⁻). Diesem Carboxylatanion ist erfindungsgemäß ein Ammoniumkation zugeordnet, so dass die polymere Verbindung als quartäres Ammoniumsalz vorliegt.

Nach einer bevorzugten Ausführungsform handelt es sich bei dem Polyolefin um Polyethylen. Es liegt auch im Rahmen der Erfindung, Polypropylen und/oder Polybutylen und/oder andere Polyolefine einzusetzen. Erfindungsgemäß wird zumindest ein Polyolefin mit zumindest einem polaren Kunststoff (mit polaren funktionellen Gruppen) gemischt. Bei dem polaren Kunststoff kann es sich insbesondere um ein Polyamid handeln. Es liegt im Übrigen auch im Rahmen der Erfindung, statt der oben genannten Polyolefine und/oder polaren Kunststoffe Copolymerisate dieser Kunststoffe zu verwenden. - Die zu mischenden Kunststoffe können erfindungsgemäß in den verschiedensten Mischungsverhältnissen gemischt werden. So kann bei einer Mischung aus zwei Kunststoffen der Anteil des einen Kunststoffes 1 bis 50 Gew.-% betragen.

Nach sehr bevorzugter Ausführungsform, der im Rahmen der Erfindung ganz besondere Bedeutung zukommt, weist der polymere Verträglichkeitsvermittler an zumindest zwei benachbarten Kohlenstoffatomen jeweils zumindest eine Carboxylatgruppe und/oder eine Carboxylgruppe auf. So liegt es im Rahmen der Erfindung, dass an einem Kohlenstoffatom des polymeren Verträglichkeitsvermittlers eine Carboxylatgruppe (-COO⁻) und an einem benachbarten Kohlenstoffatom des polymeren Verträglichkeitsvermittlers eine Carboxylgruppe (-COOH) angeschlossen ist. Statt der Carboxylgruppe kann grundsätzlich an dem benachbarten Kohlenstoffatom auch eine Estergruppe (-COOR) der Amidgruppe (-CONHR) angeschlossen sein.

Es liegt im Rahmen der Erfindung, dass der als quartäres Ammoniumsalz vorliegende polymere Verträglichkeitsvermittler ein Tetraalkylammoniumion aufweist. Dem Carboxylation ist in dem polymeren Verträglichkeitsvermittler somit ein quartäres Ammonium NR₄⁺ zugeordnet. Vorzugsweise weist der polymere Verträglichkeitsvermittler ein Trimethylalkylammonium auf, bei dem an das N-Atom drei Methylgruppen sowie eine andere davon unterschiedliche Alkylgruppe angeschlossen ist. Es liegt im Rahmen der Erfindung, dass der polymere Verträglichkeitsvermittler ein quartäres Alkylaryl-, Dialkylaryl- oder Trialkylarylammoniumion aufweist.

Gegenstand der Erfindung ist auch ein Verfahren zur Herstellung einer Kunststoffmischung gemäß Patentanspruch 4. - Es liegt dabei im Rahmen der Erfindung, dass zunächst eine polymere Basisverbindung hergestellt wird, die zumindest eine Carboxylgruppe (-COOH) enthält. Zu dieser polymeren Basisverbindung wird dann ein quartäres Ammoniumsalz gegeben. Hierbei handelt es sich zweckmäßigerweise um ein Ammoniumhalogenid, vorzugsweiwe ein Tetraalkylammoniumhalogenid NR₄X (vorzugsweise ist X = Cl, Br). Erfindungsgemäß wird die Carboxylgruppe der polymeren Basisverbindung in eine Carboxylatgruppe bzw. ein Carboxylation überführt, dem dann ein quartäres Ammoniumkation zugeordnet ist, so dass letztendlich der polymere Verträglichkeitsvermittler als quartäres Ammoniumsalz vorliegt.

Erfindungsgemäß wird der erfindungsgemäße polymere Verträglichkeitsvermittler durch Copolymerisation von zumindest einem ungesättigten Kohlenwasserstoff mit einer ungesättigten Carbonsäure und/oder mit zumindest einem Derivat einer ungesättigten Carbonsäure erhalten. Nach sehr bevorzugter Ausführungsform der Erfindung wird der polymere Verträglichkeitsvermittler durch Copolymerisation von zumindest einem ungesättigten Kohlenwasserstoff mit mehr als zehn Kohlenstoffatomen, vorzugsweise mit mehr als zwanzig Kohlenstoffatomen, mit zumindest einer ungesättigten polyvalenten Carbonsäure und/oder mit zumindest einem Derivat einer ungesättigten polyvalenten Carbonsäure hergestellt. Nach einer Ausführungsform der Erfindung weist der ungesättigte Kohlenwasserstoff lediglich eine C-C-Doppelbindung auf. Es liegt im Rahmen der Erfindung ein α-Olefin einzusetzen. Bevorzugt weist der ungesättigte Kohlenwasserstoff mehr als fünfundzwanzig Kohlenstoffatome auf, beispielsweise fünfundzwanzig bis fünfzig Kohlenstoffatome. Polyvalente Carbonsäure meint im Rahmen der Erfindung eine Carbonsäure mit mehr als einer Carboxylgruppe. Nach sehr bevorzugter Ausführungsform, der im Rahmen der Erfindung ganz besondere Bedeutung zukommt, wird dabei eine polyvalente Carbonsäure eingesetzt, die jeweils eine Carboxylgruppe an zwei benachbarten Kohlenstoffatomen aufweist oder es wird ein Derivat einer solchen polyvalenten Carbonsäure eingesetzt. Derivat einer Carbonsäure meint im Rahmen der Erfindung insbesondere ein Säureanhydrid oder ein Säureester. - Nach sehr bevorzugter Ausführungsform weist der als Ammoniumsalz vorliegende polymere Verträglichkeitsvermittler die nachfolgend dargestellte Struktur auf:

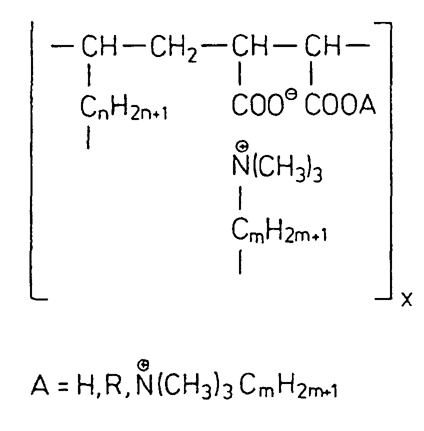

In dieser Formel gilt vorzugsweise n ≥ 16 und m ≤ 20. Außerdem gilt vorzugsweise x = 1-100, bevorzugt x = 2-100.

Nach sehr bevorzugter Ausführungsform, der im Rahmen der Erfindung ganz besondere Bedeutung zukommt, wird der polymere Verträglichkeitsvermittler durch Copolymerisation des ungesättigten Kohlenwasserstoffs mit zumindest einer ungesättigten Dicarbonsäure und/oder mit zumindest einem Derivat einer ungesättigten Dicarbonsäure hergestellt. Dabei wird vorzugsweise eine Dicarbonsäure eingesetzt, die an zwei benachbarten Kohlensoffatomen jeweils eine Carboxylgruppe aufweist oder es wird ein Derivat einer solchen Dicarbonsäure verwendet. Im Rahmen der Erfindung können als ungesättigte Dicarbonsäuren zweckmäßigerweise Maleinsäure oder Fumarsäure eingesetzt werden. Als Derivat einer ungesättigten Dicarbonsäure können vorzugsweise Maleinsäureanhydrid oder ein Maleinsäureester oder ein Fumarsäureester verwendet werden.

Ein sehr bevorzugte Ausführungsform des erfindungsgemäßen Verfahrens ist dadurch gekennzeichnet, dass die Herstellung des polymeren Verträglichkeitsvermittlers als quartäres Ammoniumsalz und die Mischung mit zumindest einem Polyolefin in einem Verfahrensschritt erfolgt. Das auf diese Weise modifizierte Polyolefin wird danach mit zumindest einem Kunststoff mit polaren Gruppen gemischt. Herstellung des Ammoniumsalzes meint dabei zweckmäßigerweise, dass zu der polymeren Basisverbindung, die zumindest eine Carboxylgruppe oder zumindest eine Carboxylatgruppe enthält, ein erstes Ammoniumsalz gegeben wird, so dass der polymere Verträglichkeitsvermittler in Form eines Ammoniumsalzes gebildet wird. Durch die letztgenannte Ausführungsform des erfindungsgemäßen Verfahrens wird die Anzahl der Verfahrensschritte beachtlich reduziert und somit wird auch der Aufwand reduziert.

Der Erfindung liegt die Erkenntnis zugrunde, dass mit dem erfindungsgemäßen polymeren Verträglichkeitsvermittler eine hervorragende Mischbarkeit von zwei oder mehr Kunststoffen erzielt werden kann. Dabei werden sehr homogene Kunststoffmischungen erreicht. Durch Einsatz des erfindungsgemäßen polymeren Verträglichkeitsvermittlers sind die Kunststoffe einfach und reproduzierbar in quasi allen Mischungsverhältnissen mischbar. Dadurch können die Eigenschaften der Kunststoffmischungen sehr gezielt und reproduzierbar eingestellt werden. Hierdurch ist es möglich, sehr spezielle Permeationseigenschaften oder Brandschutzeigenschaften oder mechanische Eigenschaften der Kunststoffmischung gezielt herzustellen.

Die erfindungsgemäße Kunststoffmischung kann verwendet werden für Behälter zur Aufnahme von fluiden Medien, insbesondere für Behälter zur Aunfahme von kohlenwasserstoffhaltigen fluiden Medien. Aufgrund der optimalen Mischbarkeit der Kunststoffe, die mit dem erfindungsgemäßen polymeren Verträglichkeitsvermittler erreicht wird, können vorteilhafte Permeationseigenschaften des Kunststoffmaterials eingestellt werden, so dass sich die Kunststoffmischung für die Herstellung eines genannten Behälters sehr gut eignet.

Der Begriff Kunststoffmischung steht für Kunststoff mit chemisch verschiedenen Komponenten. Anstelle des Begriffs Kunststoffmischung werden häufig auch die Begriffe Polymermischung, Polymerblend oder Polymerlegierung verwendet.

## Patentansprüche

1. Kunststoffmischung aus einem Polyolefin oder einem Copolymerisat dieses Polyolefins und zumindest einem Kunststoff mit polaren Gruppen, wobei zumindest ein polymerer Verträglichkeitsvermittler enthalten ist, wobei der polymere Verträglichkeitsvermittler ein Copolymerisat aus zumindest einem ungesättigten Kohlenwasserstoff mit zumindest einer ungesättigten Carbonsäure und/oder mit zumindest einem Derivat einer ungesättigten Carbonsäure ist und wobei der polymere Verträglichkeitsvermittler zumindest eine Carboxylatgruppe aufweist und als Ammoniumsalz vorliegt, **dadurch gekennzeichnet, dass** der Kunststoff mit den polaren Gruppen zumindest ein Kunststoff aus der Gruppe "Polyamid, Polyester, Polyvinylalkohol, Polycarbonat, Polyoxymethylen, Polyvinylpyrrolidon, Polyimid, Polycaprolacton" oder ein Copolymerisat zumindest eines dieser Kunststoffe ist und dass der polymere Verträglichkeitsvermittler als quartäres Ammoniumsalz vorliegt.

2. Kunststoffmischung nach Anspruch 1 **dadurch gekennzeichnet, dass** der polymere Verträglichkeitsvermittler an zumindest zwei benachbarten Kohlenstoffatomen jeweils zumindest eine Carboxylatgruppe und/oder eine Carboxylgruppe aufweist.

3. Kunststoffmischung nach einem der Ansprüche 1 oder 2, **dadurch gekennzeichnet, dass** der als quartäres Ammoniumsalz vorliegende polymere Verträglichkeitsvermittler ein Tetraalkylammoniumion aufweist.

4. Verfahren zur Herstellung einer Kunststoffmischung wobei ein polymerer Verträglichkeitsvermittler durch Copolymerisation von zumindest einem ungesättigten Kohlenwasserstoff mit zumindest einer ungesättigten Carbonsäure und/oder mit zumindest einem Derivat einer ungesättigten Carbonsäure als Ammoniumsalz mit zumindest einer Carboxylatgruppe hergestellt wird, wobei der polymere Verträglichkeitsvermittler mit dem Polyolefin oder einem Copolymerisat des Polyolefins gemischt wird und wobei diese Mischung mit einem Kunststoff mit polaren Gruppen gemischt wird, **dadurch gekennzeichnet, dass** der Kunststoff mit den polaren Gruppen zumindest ein Kunststoff aus der Gruppe "Polyamid, Polyester, Polyvinylalkohol, Polycarbonat, Polyoxymethylen, Polyvinylpyrrolidon, Polyimid, Polycaprolacton" oder ein Copolymerisat zumindest eines dieser Kunststoffe ist und dass der polymere Verträglichkeitsvermittler als quartäres Ammoniumsalz eingesetzt wird.

5. Verfahren nach Anspruch 4, wobei der polymere Verträglichkeitsvermittler durch Copolymerisation von zumindest einem ungesättigten Kohlenwasserstoff mit mehr als zehn Kohlenstoffatomen, vorzugsweise mit mehr als zwanzig Kohlenstoffatomen, mit zumindest einer ungesättigten polyvalenten Carbonsäure und/oder mit zumindest einem Derivat einer ungesättigten polyvalenten Carbonsäure hergestellt wird.

6. Verfahren nach Anspruch 5, wobei der polymere Verträglichkeitsvermittler durch Copolymerisation des ungesättigten Kohlenwasserstoffes mit zumindest einer ungesättigten Dicarbonsäure und/oder mit zumindest einem Derivat einer ungesättigten Dicarbonsäure hergestellt wird.

## Claims

1. Polymer mixture of a polyolefin or a copolymer of this polyolefin and at least one polymer with polar groups, at least one polymeric agent providing compatibility being contained therein, the polymeric agent providing compatibility being a copolymer of at least one unsaturated hydrocarbon with at least one unsaturated carboxylic acid and/or with at least one derivative of an unsaturated carboxylic acid and the polymeric agent providing compatibility having at least one carboxylate group and being present as ammonium salt, **characterised in that** the polymer with the polar groups is at least one polymer from the group of "polyamide, polyester, polyvinyl alcohol, polycarbonate, polyoxymethylene, polyvinylpyrrolidone, polyimide, polycaprolactone" or a copolymer of at least one of these polymers and that the polymeric agent providing compatibility is present as a quaternary ammonium salt.

2. Polymer mixture according to claim 1 **characterised in that** the polymeric agent providing compatibility has at least one carboxylate group and/or one carboxyl group each on at least two neighbouring carbon atoms.

3. Polymer mixture according to one of claims 1 or 2 **characterised in that** the polymeric agent providing compatibility present as quaternary ammonium salt has a tetraalkyl ammonium ion.

4. Process for the production of a polymer mixture, a polymeric agent providing compatibility being produced by copolymerisation of at least one unsaturated hydrocarbon with at least one unsaturated carboxylic acid and/or with at least one derivative of an unsaturated carboxylic acid as ammonium salt with at least one carboxylate group, the polymeric agent providing compatibility being mixed with the polyolefin or a copolymer of the polyolefin and this mixture being mixed with a polymer with polar groups, **characterised in that** the polymer with the polar groups is at least one polymer from the group of "polyamide, polyester, polyvinyl alcohol, polycarbonate, polyoxymethylene, polyvinylpyrrolidone, polyimide, polycaprolactone" or a copolymer of at least one of these polymers and that the polymeric agent providing compatibility is used as quaternary ammonium salt.

5. Process according claim 4, the polymeric agent providing compatibility being produced by copolymerisation of at last one unsaturated hydrocarbon with more than ten carbon atoms, preferably with more than twenty carbon atoms, with at least one unsaturated polyvalent carboxylic acid and/or with at least one derivative of an unsaturated polyvalent carboxylic acid.

6. Process according to claim 5, the polymeric agent providing compatibility being produced by copolymerisation of the unsaturated hydrocarbon with at least one unsaturated dicarboxylic acid and/or with at least one derivative of an unsaturated dicarboxylic acid.

## Revendications

1. Mélange de matières plastiques composé d'une polyoléfine ou d'un copolymère de cette polyoléfine et d'au moins une matière plastique avec des groupes polaires, contenant au moins un médiateur polymérique de compatibilité, le médiateur polymérique de compatibilité étant un copolymère d'au moins un hydrocarbure insaturé avec au moins un acide carboxylique insaturé et/ou avec au moins un dérivé d'un acide carboxylique insaturé, et le médiateur polymérique de compatibilité comportant au moins un groupe carboxylate et étant présent sous forme de sel d'ammonium, **caractérisé en ce que** la matière plastique avec les groupes polaires est au moins une matière plastique du groupe « polyamide, polyester, alcool polyvinylique, polycarbonate, polyoxyméthylène, polyvinylpyrrolidone, polyimide, polycaprolactone » ou un copolymère d'au moins l'une de ces matières plastiques, et **en ce que** le médiateur polymérique de compatibilité est présent sous forme de sel d'ammonium quaternaire.

2. Mélange de matières plastiques suivant la revendication 1, **caractérisé en ce que** le médiateur polymérique de compatibilité comporte sur chacun au moins de deux atomes de carbone voisins au moins un groupe carboxylate et/ou un groupe carboxyle.

3. Mélange de matières plastiques suivant l'une des revendications 1 et 2, **caractérisé en ce que** le médiateur polymérique de compatibilité, présent sous forme de sel d'ammonium quaternaire, comporte un ion tétra-alcoylammonium.

4. Procédé de préparation d'un mélange de matières plastiques, un médiateur polymérique de compatibilité étant préparé par copolymérisation d'au moins un hydrocarbure insaturé avec au moins un acide carboxylique insaturé et/ou au moins avec un dérivé d'un acide carboxylique insaturé sous forme de sel d'ammonium avec au moins un groupe carboxylate, le médiateur polymérique de compatibilité étant mélangé avec la polyoléfine ou un copolymère de la polyoléfine, et ce mélange étant mélangé avec une matière plastique renfermant des groupes polaires, **caractérisé en ce que** la matière plastique avec les groupes polaires est au moins une matière plastique du groupe « polyamide, polyester, alcool polyvinylique, polycarbonate, polyoxyméthylène, polyvinylpyrrolidone, polyimide, polycaprolactone » ou un copolymère d'au moins l'une de ces matières plastiques, et **en ce que** le médiateur polymérique de compatibilité est utilisé sous forme de sel d'ammonium quaternaire.

5. Procédé suivant la revendication 4, le médiateur polymérique de compatibilité étant préparé par copolymérisation d'au moins un hydrocarbure insaturé à plus de dix atomes de carbone, de préférence à plus de vingt atomes de carbone, avec au moins un acide carboxylique polyvalent insaturé et/ou avec au moins un dérivé d'un acide carboxylique polyvalent insaturé.

6. Procédé suivant la revendication 5, le médiateur polymérique de compatibilité étant préparé par copolymérisation de l'hydrocarbure insaturé avec au moins un acide dicarboxylique insaturé et/ou avec au moins un dérivé d'un acide dicarboxylique insaturé.
